# EUROPÄISCHE PATENTSCHRIFT

(11) **EP 1 181 149 B1**
(45) Veröffentlichungstag und Bekanntmachung des Hinweises auf die Patenterteilung: **10.12.2003**
(21) Anmeldenummer: 01917087.7
(22) Anmeldetag: 13.03.2001
(51) Int. Cl.: B29C 70/44

(54) **VERFAHREN UND VORRICHTUNG ZUR HERSTELLUNG VON FASERVERSTÄRKTEN BAUTEILEN MITTELS EINES INJEKTIONSVERFAHRENS**
METHOD AND DEVICE FOR PRODUCING FIBRE-REINFORCED COMPONENTS USING AN INJECTION METHOD
PROCEDE ET DISPOSITIF POUR FABRIQUER PAR INJECTION DES ELEMENTS RENFORCES PAR DES FIBRES

(30) Priorität: 17.03.2000 DE 10013409
(43) Veröffentlichungstag der Anmeldung: 27.02.2002
(73) Patentinhaber: EADS Deutschland GmbH, 81663 München (DE)
(72) Erfinder: FILSINGER, JÜRGEN, 85653 Aying (DE); LORENZ, Torsten, 86161 Augsburg (DE); STADLER, Franz, 85113 Böhmfeld (DE); UTECHT, Stefan, 86910 Kaufering (DE)
(86) Internationale Anmeldenummer: EP0102777
(87) Internationale Veröffentlichungsnummer: WO01068353

(56) Entgegenhaltungen:
- US-A- 4 942 013

## Beschreibung

Die Erfindung betrifft ein Verfahren zur Herstellung von faserverstärkten Kunststoff-Bauteilen aus trockenen Faserverbundhalbzeugen mittels eines Injektionsverfahrens und einer anschließenden Niederdruckaushärtung sowie eine Vorrichtung zur Durchführung des Verfahrens.

Derartige Verfahren verwenden trockene Faserverbundhalbzeuge, sogenannte Preforms, um Bauteile mit abwickelbarer, nicht abwickelbarer oder nicht vollständig abwickelbarer Geometrie herzustellen. Das trockene Faserverbundhalbzeug kann hierbei als Gewebe, als Multiaxialgelege oder als kettverstärktes unidirektionales Halbzeug vorliegen. Die genannten Preforms finden bei der Herstellung von Bauteilen aus Faserverbundwerkstoff Anwendung und sind ein Zwischenarbeitsgang, bevor die Infiltration durch Harz und die Aushärtung erfolgt.

Ein derartiges Verfahren ist als sogenanntes Resin Film Infusion (RFI) Verfahren bekannt. Hierbei werden trockene Kohlefasern (CFK), CFK-Gewebe oder CFK-Gelege in einer Aushärtevorrichtung abgelegt und von außen mit einer definierten nicht flüssigen Harzfilmmenge belegt. Die so bestückten und evakuierten Aushärtewerkstoffe werden dann in einem Autoklaven oder einem anderen Druckbehältnis unter Temperatur und Druckbeaufschlagung ausgehärtet. Die Verwendung von Druckbehältnissen und die hierfür notwendigen komplexen Werkzeuge sind jedoch sehr aufwendig und machen derartige Verfahren auch komplex hinsichtlich einzuhaltender Temperaturen und Drücke. Dadurch ist der Anwendungsbereich solcher Verfahren begrenzt.

Weiterhin ist die Verwendung trockener Preform-Teilen aus der DE-OL 198 13 105 A1 bekannt, in der ein Verfahren zur Herstellung von Faserverbund-Bauteilen offenbart ist, bei dem die Fasern und das Matrixmaterial in einem mindestens zwei Teile umfassenden , einen Form-Hohlraum bildenden Werkzeug geformt werden, wobei die im Formhohlraum befindliche Luft entweichen kann. Dabei wird Formhohlraum-seitig vor den Öffnungen eine poröse Membran angebracht, deren Poren derart dimensioniert sind, daß die Luft ungehindert abführbar ist und das Matrix-Material im Form-Hohlraum zurückgehalten wird.

Zwar wird bei der Lösung der DE-OL 198 13 105 A1 auf die Druckaufbringung verzichtet. Jedoch ist ein Nachteil dieses Gegenstands, daß mit diesem Verfahren die Größe des herzustellenden Bauteils begrenzt ist, da das Matrix-Material nur begrenzt in die Fasern, d.h. die Preforms eingeführt werden kann, sofern hierfür z.B. ein zentraler Matrixanguß vorgesehen ist, da dann die Matrix längs der Preformebene, also entlang der Fasern, fliessen muß. Diese Fließrichtung hat hierbei für die Matrix auf Grund der zurückzulegenden Strecke und des Werkstoffwiderstandes den größten Fließwiderstand. Eine Durchtränkung ist somit in der Fließlänge begrenzt. Alternativ kann bei DE-OL 198 13 105 A1 die Matrix flächig eingebracht werden. Hierzu dienen Harzvorratsbehälter welche sich auf der Bauteiloberfläche befinden und jeweils eine eigene aufwendige Harzzuführung bis zur Preform benötigen und somit an jeder Position das Risiko einer Undichtigkeit (Ausschuß-Risiko) aufweisen.

Ein weiterer Nachteil ist, daß dieses Verfahren nur bedingt sehr hohe, an das herzustellenden Bauteil gestellte Qualitätsstandards erfüllen kann, da durch die potentiellen Harzdurchführungen durch die Vakuumfolie und die Membran bis zur Preform-Oberfläche an vielen Stellen des Bauteiles Matrixwerkstoff durch die Membrane dringen kann und diese von oben versiegelt. Die Funktion der Entlüftung ist in diesem Fall nicht mehr gegeben und durch die Reaktion während des Aushärtevorganges (z.B. durch eingeschlossene Luft, chem. Abspaltung, flüchtige Bestandteile u.a.) bilden sich innerhalb des Laminates Poren, welche nicht entsorgt werden können und die Bauteilqualität vermindern.

Andere bekannte Niederdruckverfahren wie z.B. VARI (Anmeldung unbekannt, DLR) verzichten auf die Membran und die zweiteiligen Vakuumräume. Sie lösen die Vermeidung von Poren durch eine Prozeßführung von Vakuum und Temperatur außerhalb des Siedebereiches des Matrixwerkstoffes. Es entstehen somit keine Poren im Bauteil. Allerdings ist von Nachteil, daß die Temperatur- und Vakuumführung an jeder Stelle des Bauteiles sehr exakt eingehalten werden muß, um nicht lokal in den Siedebereich der Matrix mit anschließender lokalen Porenbildung zu gelangen. Bei großen Bauteilen ist diese exakte Prozeßführung nur schwer und aufwendig realisierbar. Weiterhin von Nachteil ist bei diesem Verfahren, daß durch das permanente Vakuumsaugen Matrixwerkstoff aus dem Bauteil gesaugt werden kann, welche wieder für Poren verantwortlich sind. Zusätzlich ist eine Harzfalle o.ä. erforderlich um eine Beschädigung der Vakuumpumpe durch austretenden Matrixwerkstoff zu verhindern.

Weiterhin ist ein Verfahren und eine Vorrichtung gemäß dem einleitenden Teil der Ansprüche 1 und 2 aus US-A-4 942 013 bekannt.

Die Aufgabe der Erfindung besteht daher darin, ein Verfahren zur Herstellung von faserverstärkten Kunststoff-Bauteilen aus trockenen Faserverbundhalbzeugen mittels eines Injektionsverfahrens sowie eine Vorrichtung zur Durchführung des Verfahrens zu schaffen, das sich auch für größere Bauteile eignet und mit dem ein möglichst einfacher Verfahrensablauf und gleichzeitig eine hohe Bauteilqualität erreichbar ist.

Diese Aufgabe wird mit den Merkmalen der unabhängigen Ansprüche gelöst.

Mit der erfindungsgemäßen Lösung lassen sich insbesondere Bauteile sehr hoher Qualität erzielen. Dies ist insbesondere für hochbelastete tragende CFK-Luftfahrtstrukturen vorteilhaft. Typische Kenngrößen für die Qualität der Bauteile ist z.B. der Porengehalt innerhalb des ausgehärteten CFK-Laminates und die Temperaturbeständigkeit, gemessen als sogenannter TG-Wert, welcher ein Maß für die sogenannte Glasübergangstemperatur des Matrixwerkstoffes nach dem Prozeß darstellt.

Insbesondere dient die erfindungsgemäße Lösung der Herstellung faserverstärkter Kunststoffbauteile aus Kohlefasern (CFK), Glasfasern (GFK), Aramidfasern (AFK), Borfasern (BFK) oder Hybridwerkstoffen mit abwickelbarer, nicht abwickelbarer oder nicht vollständig abwickelbarer Geometrie. Dabei eignet sie sich auch zur Herstellung unversteifter und versteifter, großflächiger Beplankungsfelder, Kunststoffwerkzeugen oder Schäftungsreparaturen von geschädigten FVW Bauteilen. Die Versteifung kann eine sogenannte Integralversteifung (Profile aus CFK u.a., Profile als Kombination von Sandwich und CFK u.a.) oder eine typische flächenhafte Sandwichstruktur sein.

Die erfindungsgemäße Lösung bietet ein kosteneffektives Verfahren zur Herstellung faserverstärkter Bauteile, Kunststoffwerkzeuge und Reparatur-Patches für Schäftungen durch eine Vakuuminjektionstechnik und eine autoklavlose bzw. überdrucklose Aushärtung unter Vakuum.

Die Erfindung wird im folgenden an Hand der beiliegenden Figuren beschrieben, die zeigen:
- FIG 1: einen Schnitt durch die erfindungsgemäße Vorrichtung in schematischer Darstellung, mit der das erfindungsgemäße Verfahren durchführbar ist,
- FIG 2: einen typischen Aufbau für ein integralversteiftes Bauteil als Sandwichhutprofilvariante in der Vorrichtung nach der Figur 1,
- FIG 3: einen typischen Aufbau für ein integralversteiftes Bauteil als T-Profilvariante in der Vorrichtung nach Figur 1
- FIG 4: einen typischen Temperatur- und Vakuums-Verlauf über die Zeit für ein sogenanntes 350°F System,
- FIG 5: einen typischen Temperatur- und Vakuums-Verlauf über die Zeit für ein sogenanntes Raumtemperatur (RT) -System,
- Fig. 6: einen Schnitt durch eine alternative Ausfürhungsform der erfindungsgemäßen Vorrichtung in schematischer Darstellung.

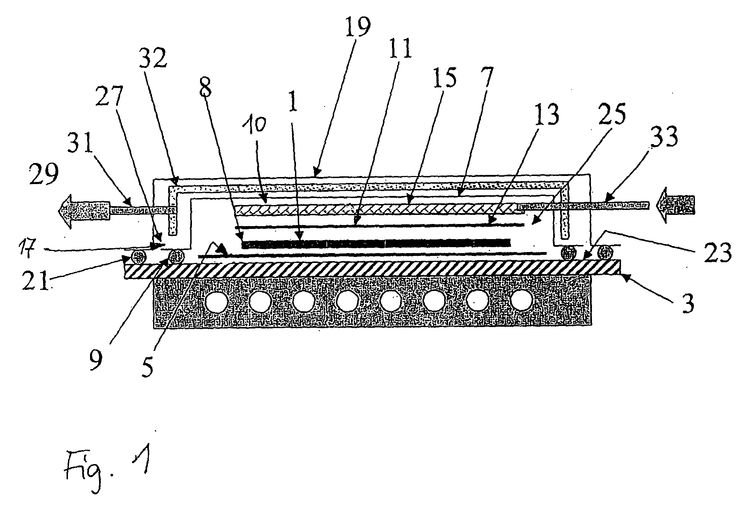

Die in Fig. 1 dargestellte Vorrichtung zeigt das herzustellende Bauteil oder trockene Faserverbund-Halbzeuge 1, das auf einem Werkzeug 3 z.B. mittels eines Aufbaus 5 angeordnet ist. Das Bauteil oder Laminat kann dabei ein Kunststoffbauteil aus Kohlefasern (CFK), Glasfasern (GFK), Aramidfasern (AFK), Borfasern (BFK) oder Hybridwerkstoffen mit abwickelbarer, nicht abwickelbarer oder nicht vollständig abwickelbarer Geometrie sein und insbesondere zur Herstellung unversteifter und versteifter, großflächiger Beplankungsfelder, Kunststoffwerkzeugen oder Schäftungsreparaturen von geschädigten FVW-Bauteilen verwendet werden. Die Versteifung kann dabei eine sogenannte Integralversteifung (Profile aus CFK u.a., Profile als Kombination von Sandwich und CFK u.a.) oder eine typische flächenhafte Sandwichstruktur darstellen. Das Werkzeug 3 weist eine zur Aufnahme des Bauteils 1 bzw. gegebenenfalls des Aufbaus 5 geeignete Form auf und kann aus verschiedenen geeigneten Materialien, z.B. Holz, Stahl, Blech, Glas und dergleichen, gebildet sein.

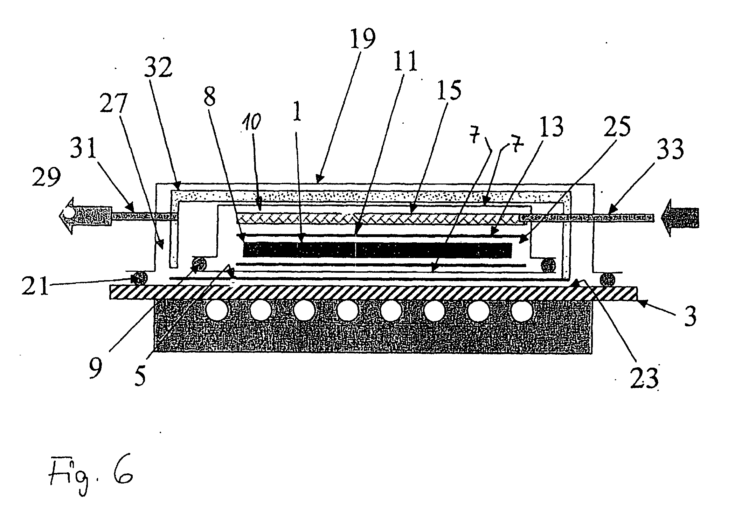

Das Bauteil 1 ist mit einer semipermeablen Membran 7 überzogen, die gasdurchlässig ist, jedoch den Durchtritt von Matrix-Material verhindert. Die Membran 7 ist außerhalb der Umfangsfläche 8 aber möglichst dicht am Bauteil 1 mittels einer Dichtung 9 abgedichtet, die der Abdichtung des durch die Membran 7 und der Auflage 5 bzw. der Werkzeugoberfläche 3 gebildeten ersten Raums 10 dient. Alternativ kann die Membran 7 auch um das gesamte Bauteil herumgeführt sein, wie es in der Fig. 6 dargestellt ist. Dies kann mit der Dichtung 9 (Fig. 6) oder auch ohne einer solchen durch einteiliges Ausbilden der Membran 7 erfolgen. Zwischen dem Bauteil 1 und der Membran 7 kann über der gesamten der der Membran 7 zugewandten Oberfläche 11 des Bauteils 1 ein Abreißgewebe 13 (optional) und ein Abstandhalter als Fließhilfe 15 angeordnet sein, das bzw. der die Funktion hat, die Membran 7 in einem Abstand zur Oberfläche 11 des Bauteils 1 zu halten. Die Fließhilfe 15 kann eine Art Rost oder Gitter oder auch ein steifes Gewebe bzw. Gewirk oder Geflecht sein, welches sich nicht unter Vakuum stark kompaktieren läßt und z.B. aus den Werkstoffen Metall, Kunststoffen oder textilen Halbzeugen besteht.

Die Anordnung 17 aus Aufbau 5, Bauteil 1, Membran 7 mit Dichtung 9 sowie mit Abreißgewebe 13 und Fließhilfe 15 ist überdeckt mit einer Folie 19, die gas-undurchlässig ist. Diese ist um den Umfang der Membran 7 herum mit einer Dichtung 21 auf dem Werkzeug 3 abgedichtet, so daß der von der Oberfläche 23 des Werkzeugs 3 und der Innenwand der Folie 19 gebildete zweite Raum oder Innenraum 27 zur Umgebung dicht ist. Zwischen der Folie 19 und der Membran 7 ist ein Lüftergewebe 32 eingelegt, welches z.B. ein Glasgewebe ein Vlies o.a. sein kann. Dieses Lüftergewebe 32 hat die Funktion die durch die Membran aus dem Innenraum 10, 25 abgesaugte Luft und Gase im Innenraum 27 entlang der Membranoberfläche zur Absaugung durch die Vakuumpumpe 29 zu leiten. Dieser Innenraum 27 ist mittels einer Vakuum-Pumpe 29 (nicht gezeigt) und einer entsprechenden in den Innenraum 10, 25 hineinführenden Gasleitung 31 evakuierbar. Weiterhin verläuft in den Innenraum 10, 25 eine zweite Leitung 33, durch die Matrix-Material und insbesondere Harz in den Innenraum 10, 25 eingeführt werden kann.

Zur Einführung von Matrix-Material in das Bauteil 1 führen Schläuche oder Leitungen 33, die an einen Harzvorratsbehälter (nicht gezeigt) angeschlossen sind, in einen im ersten Raum 10 gelegenen Raum 25. Das Werkzeug und der Vorratsbehälter für das Matrix-Material stehen jeweils entweder auf Heizplatten, innerhalb einer Wärmekammer, innerhalb einer heizbaren Flüssigkeit (Ölbad o.ä.) oder innerhalb eines regelbaren Ofens, sofern das gewählte Harzsystem eine thermische Behandlung während der Injektion benötigt.

An die Folie 19, an das Abreißgewebe 13, an die Membran 7, an das Lüftergewebe 32 und an die Fließhilfe 15 werden als gemeinsame Anforderung eine Beständigkeit gegen die verwendeten Matrixsysteme während der Prozeßdauer und eine Beständigkeit gegenüber während des Prozesses auftretenden Temperaturen gefordert. Entsprechend der abzubildeten Geometrie muß eine Ablage in dieser Geometrie durch Dehnung, Faltenlegung o.ä. möglich sein.

Die Folie 19 ist eine dem Stand der Technik entsprechende Vakuum-Membran, welche gas-undurchlässig ist und die oben ausgeführten Merkmale aufweist. Als Funktion hat es die Aufgabe, den zweiten Raum 27 gegenüber der Umgebung abzudichten. Als typische Materialien hierfür kommen Folien oder Gummi-Membrane in Betracht. Beispiele für eine 180 °C (350°F) Anwendung wären z.B. Folien auf Basis PTFE, FEP u.a. Andere Werkstoffe kommen je nach gewählten Matrixsystem und dessen spezifischen Aushärtetemperaturen unter Beachtung der oben beschriebenen Forderung in Betracht.

Das Abreißgewebe 13, in der Literatur auch als Peel Ply bezeichnet, hat die Funktion, daß sich nach der Prozeßführung die mit Matrixmaterial gefüllte Fließhilfe 15 leichter durch abziehen (abreißen=Abreißgewebe). d.h. von dem Bauteil 1 trennen läßt, da alle aufgezeigten Hilfsstoffe nur als Hilfsmittel zur Herstellung des Bauteils 1 dienen. Das Abreißgewebe 13 ist so beschaffen, daß es keine dauerhafte Verbindung mit dem Matrixwerkstoff und der Bauteiloberfläche eingeht. Dieses wird durch die Oberflächenstruktur des Abreißgewebes und/oder durch zusätzliche Antihaftbeschichtungen (wie z.B. PTFE, Silikon o.ä.) erreicht. Als typische Materialien sind Glasgewebe, Nylongewebe u.ä. anzuführen. Das Abreißgewebe muß gasdurchlässig und ebenso durchlässig für das Matrixmaterial in beiden Richtungen sein.

Die Membran 7 ist eine semipermeable Membran aus z. B. technischem Kunststoffmaterial, welche sich hinsichtlich der temperatur- und Medienbeständigkeit an den prozeßbedingungen orientiert. Weiterhin ist diese Membran durchlässig für Gase ist, jedoch ist sie für Flüssigkeiten mit Viskositäten vergleichbar Wasser nicht durchlässig. Dieses Verhalten wird durch in der Membran befindliche gasdurchlässige Poren erreicht, welche mehr oder minder großflächig auf der Membranoberfläche verteilt sind. Die Größe der Poren ist so gewählt, daß das Matrixsystem nicht durchdringen kann. Die Dicke der Membran bewegt sich im Zehntelmillimeter Bereich. Durch die Verwendung von typischen Kunststoffmaterial ist eine ausreichende Flexiblität zum Drapieren und Formen vorhanden.

Das Lüftergewebe 32 oberhalb der Fließhilfe 15 hat die Funktion die durch die Membran abgesaugte Luft und andere flüchtige Bestandteile zur Absaugung an die Vakuumpumpe 29 zu leiten. Dieses Material kann aus einem beliebigen Werkstoff sein, sofern dieser ausreichend temperatur-, medienbeständig gegenüber den im Prozeß notwendigen Werkstoffen ist und eine Luftleitung in Längsrichtung möglich ist. Eingesetzt werden hierfür flauschige Matten, Gewebe, Gewirke, Geflechte u.a., welche aus Metall, Kunststoff u.a. Werkstoffen sein kann.

Die Fließhilfe 15 hat die Funktion, den in den Raum 25 durch die Matrixzuleitung gelangten Matrixwerkstoff auf der Bauteiloberfläche 1 das Verteilen zu ermöglichen. Die Fließhilfe 15 nimmt hierbei eine Funktion eines Fließkanales an. Die Fließhilfe 15 weist dabei eine Mindestdicke unter dem Vakuumaufbau der Folie 19 auf, um dieses Fließen zu ermöglichen. Es ist somit ein Abstandshalter, der einen Fließkanal zwischen der Membran 7 und dem Bauteil 1 bildet. Die Fließhilfe kann ein Geflecht, ein Gewebe, ein Gewirk o.ä. sein, welches durch möglichst eine grobmaschige Struktur aufweist, um einen geringen Fließwiderstand zu erzeugen. Als Werkstoff können beliebige Werkstoffe aus z.B. Metall oder Kunststoff o.a. verwendet werden, sofern die oben angeführten gemeinsamen Mindestforderungen (Temperatur und Medienbeständigkeit) erreicht werden. Die Matrix-Zuleitung 33 kann zur Unterstützung des Matrixtransportes beliebig weit in den ersten Raum 10 geführt werden. Eine Verzweigung oder mehrere Zuleitungen sind zulässig. Innerhalb des ersten Raums 10 kann diese Matrixzuleitung Öffnungen aufweisen, welche z.B. Löcher, Querschlitze, Längsschlitze o.ä. darstellen. Hierdurch wird der Harztransport in der Fließhilfe unterstützt.

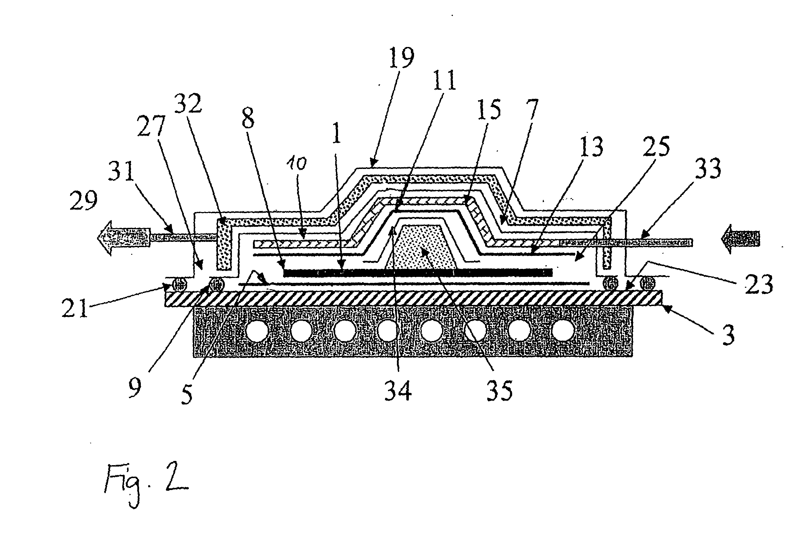

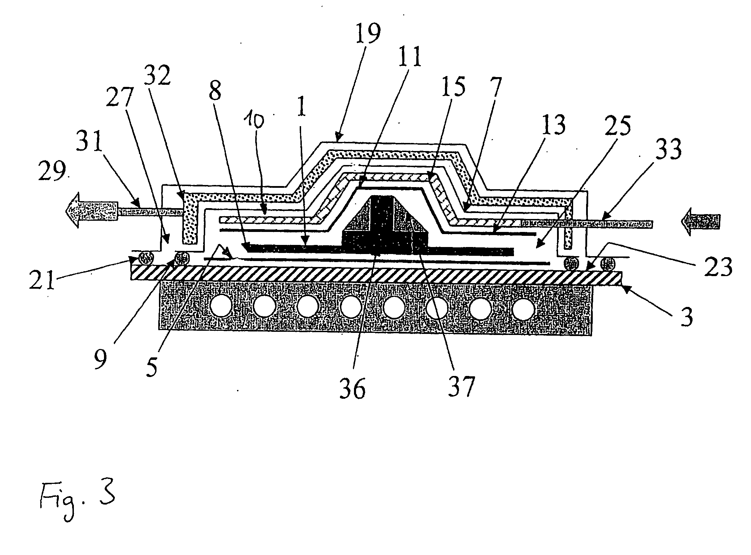

Fig. 2 und Fig.3 zeigen die erfindungsgemäße Vorrichtung nach der Fig. 1, nur ist dort zu Veranschaulichung jeweils ein andersartiges Bauteil 1 dargestellt, wobei Bestandteilen gleicher Funktion die Bezugszeichen der Figur zugeordnet sind. Es ist erkennbar, daß sich die erfindungsgemäße Vorrichtung für nahezu beliebige Formen von Bauteilen eignet. Bei Fig. 2 handelt es sich um die schematische Darstellung eines Beplankungsfeldes (Bauteil 1), welches in einer Richtung durch Hutprofile versteift ist. Diese Hutprofile weisen einen Schaumkern 35 oder einen mit beliebigen anderen Werkstoffen gebildeten Kern mit geschlossener Oberfläche und darüber abgelegte trockene FVW Halbzeuge 34 in Form eines Hutes auf. Die FVW Halbzeuge 34 sind hierbei aus dem gleichen oder ähnlichen Werkstoffen wie das Bauteil 1 gebildet. Der Schaumkern 35 und die Halbzeuge 34 sind Bestandteile des Bauteiles 1.

In der Fig. 3 ist das Bauteil 1 ebenfalls ein Beplankungsfeld, welches in Längsrichtung mit einem oder mehreren T-Profilen 36 versteift ist. Das herzustellende Bauteil 1 nach der Figur 3 ist somit aus den Einzelbestandteilen 1 und 36 gebildet. Die T-Profile 36 sind hierbei aus dem gleichen oder ähnlichen Werkstoffen wie das Bauteil 1 gbildet. Zusätzlich wird für diese Bauteilvariante eine Stütze 37 zur Fixierung der trocknen und im ungetränkten zustand labilen T-Profile 36 benötigt. Diese Stützen 37 können aus typischen festen oder semiflexiblen Werkzeugwerkstoffen wie z.B. Metall, Holz, Gummi, Kunststoff u.a. sein. Da ein direkter Kontakt mit dem Matrixwerkstoff erfolgt, muß dieser Werkstoff der Stützen 37 während des Prozesse gegenüber dem Matrixwerkstoff seine Form behalten.

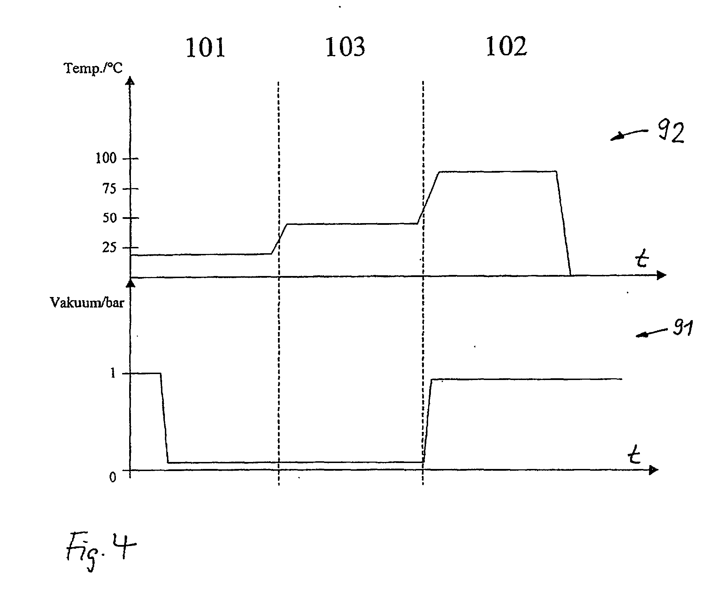

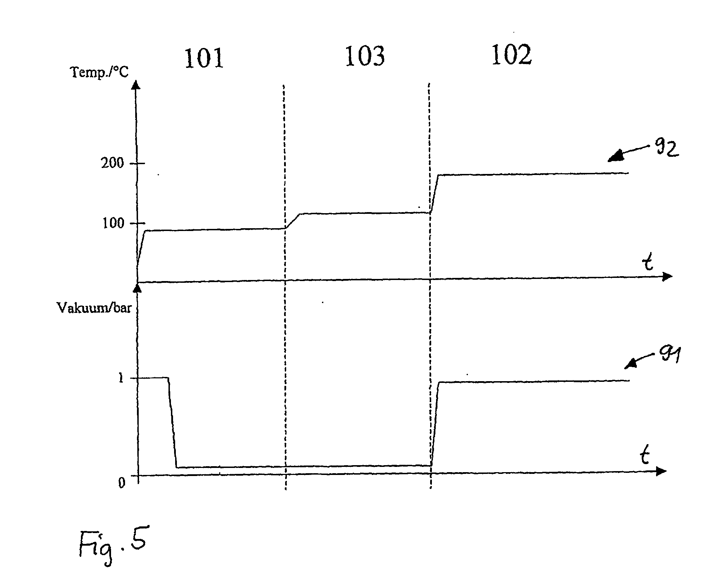

In den Fig. 4 und 5 sind typische Verläufe für verschiedene Harzsystemklassen als Vakuumverlauf 91und als Temperaturverlauf 92 dargestellt, wobei sich der Verlauf der Fig. 4 auf ein 350°F -System und die Darstellung der Fig.5 auf ein RT-System bezieht.

Im einzelnen gliedert sich der Temperatur- und Vakuum-Verlauf in zumindest zwei Phasen, die Injektionsphase 101 und die Härtungsphase 103. Nach diesen Phasen kann noch eine Temperphase 102 vorgesehen sein. In der Injektionsphase 101 ist die Temperatur geringer als in der Härtungsphase 103.

Der Temperaturverlauf und die Vakuumsteuerung sind derart vorgesehen, daß bei dem ausgehärteten Bauteil eine optimale Qualität, geringe bis keine Poren und ein geeigneter Faservolumenanteil erreicht wird. Die Vorgaben für die Temperatur ergeben sich aus den Material-Anforderungen des Matrixwerkstoffes. Das Vakuum kann hierbei unabhängig vom gewählten Matrixwerkstoff während des gesamten Prozesses bis zur Aushärtung, also dem Zustand in dem der Matrixwerkstoff seinen Aggregatzustand von flüssig in irreversibel fest geändert hat, auf gleichbleibendem Niveau gehalten werden. Übliche Werte und Toleranzen, die hierbei einzuhalten sind, sind z.B. 1 bis 10 mbar (Absolutdruck, nahe dem idealen Vakuum). Nach der Aushärtung 103 ist kein Vakuum mehr erforderlich. Die notwendigen Temperaturverläufe sind wie folgt charakterisiert: Während der Injektionsphase 101 bei vollen Vakuum ist eine Temperatur erforderlich, welche bestimmt wird durch die Viskositätskurve des Matrixwerkstoffes. Die Temperatur wird so gewählt, daß der Matrixwerkstoff ausreichend flüssig wird, um mittels Vakuumsaugen durch die Zuleitung 33 in den Innenraum 25 zugelangen. Dieses ist die Mindesttemperatur, welche für den Prozeß notwendig ist. Gleichzeitig darf diese Temperatur nicht so hoch gewählt werden, daß eine Aushärtung (Verlust von Viskosität, fester Zustand der Matrix) erreicht wird. Daher wird die Prozeßtemperatur so eingestellt (je nach gewählten Matrixwerkstoff), daß eine Injektion möglich ist (geringe Viskosität) und die verbleibende Zeit bis zur Aushärtung für die Injektion, also das nahezu vollständige Füllen des Innenraumes 25 mit Matrixwerkstoff ausreichend ist (Fachbegriff z.B. Gel-Time). Typische notwendige Viskositäten während der Injektionsphase sind hierbei z.B. Bereiche von 1 bis 1000 mPa·s. Typische Temperaturen bei einem RT - System (Fig. 5) sind z.B. 70 bis 120 °C für die Injektionsphase 101, ca. 100 bis 180°C für die Aushärtungsphase 103 und für die Temperphase 102 Werte von ca. 160 bis 210 °C.,

Für ausgewählte Matrixwerkstoffe z.B. RT - Matrixwerkstoffe ist die Variante Injektionstemperatur 101 identisch Härtungstemperatur 103 identisch Tempertemperatur 102 vorteilhaft.

Das Vakuum wird in der Injektionsphase 101 (Fig. 4) oder vor derselben gebildet. Bei dem erfindungsgemäßen Verfahren wird für die Injektion ein Vakuum von typischerweise 1 bis 10 mbar erzeugt, das sich bis zum Ende der Aushärtungsphase erstreckt und nicht reduziert werden sollte.

Im folgenden wird das erfindungsgemäße Verfahren beschrieben:

In ein beliebiges Aushärtewerkzeug werden trockene Materialien (z.B. CFK Gelege, Gewebe etc.) gemäß konstruktiven Vorgaben positioniert und somit ein Laminataufbau aus den Halbzeugeinzelschichten gebildet. Das Werkzeug ist eingetrennt, d.h. mittels Trennmittel oder Trennfolie und Abreißgewebe (Zusammen bildet es den Aufbau 5 an der Unterseite von Bauteil 1 vorbehandelt, um ein Verkleben des Matrixwerkstoffes mit dem Werkzeug zu verhindern und ein wieder entfernen des Bauteiles (Entformen) von der Werkzeugoberfläche zu ermöglichen. Das trockene Material des Bauteiles 1 ist vorzugsweise mit dem Abreißgewebe 13 versehen. Zusätzlich wird ein sogenannte Fließhilfe 15 oberhalb dieses Aufbaus durch einfaches Auflegen aufgebracht. Lokales seitliches Fixieren mit z.B. temperaturbeständigen Klebebändern ist bei komplexeren Bauteilen sinnvoll. Auf diese Fließhilfe 15 wird die nur für Luft, aber nicht für Flüssigkeiten durchlässige Membran 7 aufgelegt und mittels der Dichtung 9 abgedichtet. Anschließend wird das Lüftergewebe 32 über die Membran 7 gelegt und mittels der Folie 19 und der Dichtung 21 zur Umgebung abgedichtet. Die Matrixzuführungs-Leitung 33 und die Vakuumleitung 29 werden während dieses Vorganges mit handelsübliche Durchführungen und Dichtungen gemäß Fig. 1 eingebracht.

Nach der Aufbringung der genannten Materialien und der Folie oder Vakuumfolie 19 wird der erste Raum 10 mittels der Vakuumpumpe evakuiert. Gleichzeitig wird ein Matrixmaterial -Vorratsbehälter an das System angeschlossen, um Matrix-Material in den ersten Raum 10 einzuleiten. Durch das Vakuum entsteht ein Druckgefälle, welches das Matrix-Material aus dem Vorratsbehälter in den evakuierten ersten Raum 10, 25 saugt. Das Matrix-Material wird nunmehr mehr oder minder ungehindert und nahezu unabhängig von seiner Viskositäts-Charakteristik durch die Fließhilfe 15 und die Zuleitung 33 auf der Bauteiloberfläche verteilt. Vorhandene Luft wird hierbei durch das permante Absaugen des Innenraumes 27 durch die Membrane 7 entsorgt. Ein Fließen des Matrix-Materials innerhalb des Laminataufbaus, welcher durch einen großen Fließwiderstand gekennzeichnet ist, erfolgt hierbei nicht. Vielmehr erfolgt die Infiltration von Matrix-Material von der Bauteiloberfläche senkrecht nach unten in das Laminat. Der maximale Fließweg an jeder Stelle des Bauteiles ist somit direkt eine Funktion der Bauteildicke an diesem Punkt. Der Fließwiderstand ist somit sehr gering und folglich können auch Harzsysteme eingesetzt werden, welche auf Grund Ihrer Viskosität in der Vergangenheit nicht infiltrationsfähig waren und Bauteile mit großen Abmessungen erzeugt.

Zur Vermeidung von lokalen Luftpolstern dient die Membran 7. Erfolgt z.B. ein Schließen der sich bildenden Fließfronten und somit das Entstehen eines geschlossenen Luftposters im Bauteil 1 des Innenraumes 25 ohne Anbindung an den Vakuumabfluß der Luft, kann kein Harz in diese Luftposter einfließen. Es würde eine Fehlstelle entstehen (keine Durchtränkung). Die luftdurchlässige Membran 7 verhindert diesen Effekt, da an jeder Stelle des Bauteiles Luft immer senkrecht zur Oberfläche durch die Membran in einen belüftbaren harzfreien Raum des Vakuumaufbaues 27 gelangen kann und dort oberhalb der Membran 7 durch den Vakuumanschluß 29 mit Hilfe des Lüftergewebe 32 abgesaugt wird. Die Membran ist für das Harz nicht durchlässig. Somit ist eine Überwachung der Fließfronten nicht erforderlich, da sich der Prozeß der Durchtränkung selbst regelt. Der Grad der Durchtränkung ist eine direkte Funktion der eingebrachten Harzmenge, welche dem Prozeß zur Verfügung gestellt wird, sowie der eingebrachten Fasermenge.

Sobald die vollständige Durchtränkung abgeschlossen ist, wird unter Beibehaltung des gleichen Vakuums die Aushärtung durch eine geeignete Temperatur durchgeführt. Die hierbei durch den chemischen Prozeß entstehenden Blasen (Matrixsieden, flüchtige Bestandteile etc.) würden bei den bekannten Prozessen zur Porenbildung im fertigen Bauteil führen. Durch die Membran 7 wird dieses jetzt verhindert, da eine permante Entlüftung senkrecht zur Oberfläche des Bauteiles durch die Membran erfolgt.

Nach erfolgter Aushärtung kann das Bauteil entformt werden. Dies bedeutet, daß alle Verfahrens-Hilfsstoffe vom Bauteil 1 wieder z.B. durch abziehen von Hand entfernt werden und das Bauteil von dem Werkzeug 3 entfernt werden kann. Dieses nun entformte harte Bauteil mit aus den mit Matrix durchtränkten Halbzeugen kann je nach Anforderungsprofil einer reinen thermischen Nachbehandlung (Tempern im Schritt 102) unterzogen werden. Das Tempern kann auch vor dem Entformen erfolgen, muß aber zur Reduzierung der Werkzeug-Belegungszeiten nicht durchgeführt werden.

Die Größe der nach dem erfindungsgemäßen Verfahren herstellbaren Bauteile ist zur oberen Grenze hin nahezu unbegrenzt. Die natürliche obere Grenze ist eher in der technischen Handhabbarkeit des Bauteiles (Transport etc. ) als in dem Verfahren zu suchen. Eine Mindestgröße für diese Bauteile gibt es nicht. Die maximal realisierbare Dicke richtet sich nach den verwendeten Harztypen und der zur Verfügung stehenden Injektionszeit. Diese Injektionszeit wird durch wirtschaftliche nicht durch technische Grenzen bestimmt. Andere unerwünschte Nebeneffekte wie z.B. eine exotherme Reaktion während der Aushärtung sind nur abhängig vom Harzsystem und nicht vom Verfahren.

Zusammengefaßt handelt es sich erfindungsgemäß um ein Verfahren zur Herstellung von faserverstärkten Kunststoff-Bauteilen aus trockenen Faserverbund-Halbzeugen mittels eines Injektionsverfahrens zur Injektion von Matrix-Material , bei dem ein Absaugen von Luft aus dem zweiten Raum 27 erfolgt, wodurch sich ein Druckgefälle von dem ersten Raum 10 zu dem zweiten Raum 27 ergibt und Matrix-Material aus dem Vorratsbehälter in den evakuierten ersten Raum 10 gesaugt wird, das wegen der Fließhilfe 15 über der der Membran 7 zugewandten Oberfläche 11 des Halbzeugs 1 verteilt und senkrecht in das Halbzeug 1 eindringt. Die Verknüpfung der Funktionen Verteilung des Matrixmateriales oberhalb der Bauteiloberfläche durch die Fließhilfe und der flächigen Entlüftungsmöglichkeit oberhalb des Bauteiles und der Fließhilfe durch die Membranfolie erzielt den gewünschten Qualitätserfolg bei einer überdrucklosen Aushärtung unter Vakuum.

## Patentansprüche

1. Verfahren zur Herstellung von faserverstärkten Kunststoff-Bauteilen aus trockenen Faserverbund-Halbzeugen mittels eines Injektionsverfahrens zur Injektion von Matrix-Material mit den Schritten:
- Anordnen des Faserverbund-Halbzeugs (1) auf einem Werkzeug (3),
- Bildung eines ersten Raums (10) mittels einer Gas-durchlässigen und Matrixmaterial-undurchlässigen Membran (7) zumindest einseitig um das Halbzeug (1) herum, wobei in den ersten Raum (10, 25) Matrix-Material einführbar ist,
- Bildung eines am ersten Raum (10, 25) anliegenden zweiten Raums (27), der von der Umgebung mittels einer Gas- und Matrixmaterial-undurchlässigen, gegenüber dem Werkzeug (3) abgedichteten Folie (19) abgegrenzt ist,
- Absaugen von Luft aus dem zweiten Raum (27), wodurch Matrix-Material aus dem Vorratsbehälter in den evakuierten ersten Raum (10, 25) gesaugt und ein Eindringen des Matrixmaterials in das Halbzeug (1) bewirkt wird.

2. Verfahren zur Herstellung von faserverstärkten Kunststoff-Bauteilen aus trockenen Faserverbund-Halbzeugen mittels eines Injektionsverfahrens nach dem Anspruch 1, **dadurch gekennzeichnet, dass** an einer Oberfläche (11 ) des Halbzeugs (1) eine Fließhilfe (15) angeordnet wird, durch die beim Absaugen von Luft aus dem zweiten Raum (27) eine Verteilung des Matrixmaterials über der der Fließhilfe (15) zugewandten Oberfläche (11 ) des Halbzeugs (1) und ein Eindringen desselben in das Halbzeug (1) bewirkt wird.

3. Vorrichtung zur Herstellung von faserverstärkten Kunststoff-Bauteilen aus trockenen Faserverbund-Halbzeugen mittels eines Injektionsverfahrens zur Injektion von Matrix-Material
- mit einem Werkzeug (3) zum Anordnen des Faserverbund-Halbzeugs (1),
- einer Gas-durchlässigen und Matrixmaterial-undurchlässigen Membran (7), die zumindest einseitig um das Halbzeug (1) herum angeordnet ist und einen ersten Raum (10, 25) bildet, in den mittels einer Zuleitung (33) Matrix-Material einführbar ist,
- einem am ersten Raum (10, 25) anliegenden zweiten, gegenüber dem Werkzeug (3) abgedichteten Raum (27), der von der Umgebung mittels einer Gas- und Matrixmaterial-undurchlässigen Folie (19) abgegrenzt ist und aus dem über eine Leitung (31) Luft absaugbar ist.

4. Verfahren zur Herstellung von faserverstärkten Kunststoff-Bauteilen aus trockenen Faserverbund-Halbzeugen mittels eines Injektionsverfahrens nach dem Anspruch 3, **dadurch gekennzeichnet, dass** an einer Oberfläche (11 ) des Halbzeugs (1) eine Fließhilfe (15) angeordnet ist, durch die beim Absaugen von Luft aus dem zweiten Raum (27) eine Verteilung des Matrixmaterials über der der Fließhilfe (15) zugewandten Oberfläche (11 ) des Halbzeugs (1) und ein Eindringen desselben in das Halbzeug (1) bewirkt wird.

## Claims

1. A method of producing fibre-reinforced plastics-material components from dry fibre-composite semi-finished products by means of an injection process for injecting matrix material, with the steps:
- arranging the fibre-composite semi-finished product (1) on a tool (3),
- forming a first space (10) on at least one side around the semi-finished product (1) by means of a diaphragm (7) which is permeable to gas but impermeable to matrix material, wherein matrix material can be introduced into the first space (10, 25),
- forming a second space (27) which adjoins the first space (10, 25) and which is separated from the environment by means of a sheet impermeable to gas and matrix material and sealed off from the tool (3),
- drawing air out of the second space (27), as a result of which matrix material is drawn out of the storage container and into the evacuated first space (10, 25) and the matrix material is caused to penetrate into the semi-finished product (1).

2. A method of producing fibre-reinforced plastics-material components from dry fibre-composite semi-finished products by means of an injection process according to Claim 1, **characterized in that** a flow-assisting agent (15) is placed on a surface (11) of the semi-finished product (1), the matrix material being caused by the said flow-assisting agent (15) to be distributed over the surface (11) of the semi-finished product (1) facing the flow-assisting agent (15) and to penetrate into the said semi-finished product (1) while air is drawn out of the second space (27).

3. A device for producing fibre-reinforced plastics-material components from dry fibre-composite semi-finished products by means of an injection process for injecting matrix material, with:
- a tool (3) for arranging the fibre-composite semi-finished product (1),
- a diaphragm (7), which is permeable to gas but impermeable to matrix material and is arranged on at least one side around the semi-finished product (1) and which forms a first space (10, 25) into which matrix material can be introduced by means of a supply line (33),
- a second space (27) which adjoins the first space (10, 25) and is sealed off from the tool (3) and which is separated from the environment by means of a sheet (19) impermeable to gas and matrix material and out of which air can be drawn by way of a line (31).

4. A method of producing fibre-reinforced plastics-material components from dry fibre-composite semi-finished products by means of an injection process according to Claim 3, **characterized in that** a flow-assisting agent (15) is placed on a surface (11) of the semi-finished product (1), the matrix material being caused by the said flow-assisting agent (15) to be distributed over the surface (11) of the semi-finished product (1) facing the flow-assisting agent (15) and to penetrate into the said semi-finished product (1) while air is drawn out of the second space (27).

## Revendications

1. Procédé pour fabriquer par injection des éléments en matière plastique renforcés par des fibres à partir de produits semi-finis secs constitués d'un composé de fibres pour l'injection de matière constituant une matrice, comprenant les étapes consistant à :
- Disposer le produit semi-fini constitué d'un composé de fibres (1) sur un moule (3),
- Former un premier espace (10) au moyen d'une membrane (7) perméable au gaz et imperméable à la matière constituant une matrice, tout au moins d'un côté tout autour du produit semi-fini (1), de la matière constituant une matrice pouvant être introduite dans le premier espace (10, 25),
- Former un second espace (27) s'appuyant contre le premier espace (10, 25) qui est délimité par rapport à l'environnement au moyen d'une feuille étanche par rapport au moule, imperméable au gaz et à la matière constituant une matrice,
- Aspirer de l'air du second espace (27), de sorte que la matière constituant une matrice est aspirée du réservoir de stockage dans le premier espace évacué (10, 25) et une pénétration de la matière constituant une matrice dans le produit semi-fini (1) est produite.

2. Procédé pour fabriquer par injection des éléments en matière plastique renforcés par des fibres à partir de produits semi-finis secs constitués d'un composé de fibres, selon la revendication 1, **caractérisé en ce que** l'on dispose sur une surface (11) du produit semi-fini (1) un auxiliaire de fluidité (15) au moyen duquel, pendant l'aspiration d'air à partir du second espace (27), une répartition de la matière constituant une matrice est produite sur la surface (11), tournée vers l'auxiliaire de fluidité (15), du produit semi-fini et une pénétration de celle-ci dans le produit semi-fini (1) est produite.

3. Dispositif pour fabriquer par procédé par injection des éléments en matière plastique renforcés par des fibres à partir de produits semi-finis secs constitués d'un composé de fibres pour l'injection de matière constituant une matrice
- comportant un moule (3) pour disposer le produit semi-fini (1) constitué d'un composé de fibres,
- une membrane (7) perméable au gaz et imperméable à la matière constituant une matrice, qui est disposée tout au moins d'un côté tout autour du produit semi-fini (1) et forme un premier espace (10, 25) dans lequel de la matière constituant une matrice peut être introduite au moyen d'une conduite d'amenée (33),
- un second espace (27) s'appuyant contre le premier espace (10, 25), étanche par rapport au moule (3), qui est délimité par rapport à l'environnement au moyen d'une feuille (19) imperméable au gaz et à la matière constituant une matrice, et à partir duquel de l'air peut être aspiré par une conduite (31).

4. Procédé pour fabriquer par injection des éléments en matière plastique renforcés par des fibres à partir de produits semi-finis secs constitués d'un composé de fibres selon la revendication 3, **caractérisé en ce que** sur une surface (11) du produit semi-fini (1) un auxiliaire de fluidité (15) est disposé, au moyen duquel, pendant l'aspiration d'air à partir du second espace (27), une répartition de la matière constituant une matrice est produite sur la surface (11), tournée vers l'auxiliaire de fluidité (15), du produit semi-fini (1) et une pénétration de celle-ci dans le produit semi-fini (1) est produite.
